(19) Europäisches Patentamt
European Patent Office
Office européen des brevets

(11) **EP 2 357 318 B1**

(12) **FASCICULE DE BREVET EUROPEEN**

(45) Date de publication et mention
de la délivrance du brevet:
**10.04.2019 Bulletin 2019/15**

(51) Int Cl.:
***E21B 43/01*** *(2006.01)* ***C02F 1/20*** *(2006.01)*
***B01D 19/00*** *(2006.01)*

(21) Numéro de dépôt: **11154406.0**

(22) Date de dépôt: **14.02.2011**

(54) **INSTALLATION D'EXTRACTION D'UN GAZ DISSOUT DANS L'EAU EN GRANDE PROFONDEUR**

Anlage zur Gewinnung von in Tiefwasser gelöstem Methan

System for the obtention of a gas dissoved in water at a great depth

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.02.2010 FR 1000633**

(43) Date de publication de la demande:
**17.08.2011 Bulletin 2011/33**

(73) Titulaire: **Halbwachs, Michel
73230 Saint Jean D'Arvey (FR)**

(72) Inventeur: **Halbwachs, Michel
73230 Saint Jean D'Arvey (FR)**

(74) Mandataire: **Croonenbroek, Thomas Jakob et al
Innovincia
11, avenue des Tilleuls
74200 Thonon-les-Bains (FR)**

(56) Documents cités:
WO-A1-2004/103913    BE-A- 531 780
DE-A1- 2 939 772    JP-A- 2004 148 265
RU-C1- 2 020 287    US-A- 5 951 922
US-A1- 2006 118 495

- **SAWANT S S ET AL: "Effect of hydrodynamic cavitation on zooplankton: A tool for disinfection", BIOCHEMICAL ENGINEERING JOURNAL, ELSEVIER, AMSTERDAM, NL LNKD-DOI:10.1016/J.BEJ.2008.08.001, vol. 42, no. 3, 1 août 2008 (2008-08-01), pages 320-328, XP025433263, ISSN: 1369-703X [extrait le 2008-08-09]**
- **KIKUCHI R ET AL: "Conceptual schematic for capture of biomethane released from hydroelectric power facilities", BIORESOURCE TECHNOLOGY, ELSEVIER BV, GB LNKD-DOI:10.1016/J.BIORTECH.2007.10.030, vol. 99, no. 13, 28 novembre 2007 (2007-11-28), pages 5967-5971, XP022647453, ISSN: 0960-8524 [extrait le 2007-11-28]**

**Description**

Domaine technique :

La présente invention concerne une installation et un procédé d'extraction d'un gaz dissout dans l'eau en grande profondeur.

Art antérieur :

Il existe des lacs dans le monde dont l'eau contient en profondeur des gaz dissouts, en particulier des gaz combustibles comme par exemple le méthane.

Un tel lac est par exemple le lac Kivu entre le Rwanda et la République Démocratique du Congo ou encore les lacs Nyos et Monoun au Cameroun.

L'exploitation d'une telle ressource énergétique est une opportunité pour le développement économique d'un pays comme le Rwanda dont les ressources énergétiques d'origine fossile sont assez limitées.

De plus, une telle exploitation permet de prévenir aussi des risques d'explosion gazeuse comme cela s'est déjà produit dans le passé au lac de Nyos en 1986 ayant provoqué environ 1800 morts. Environ 66 km$^3$ de méthane sont contenus dans le lac Kivu, ce qui constitue un réservoir énergétique très important.

Depuis 2002, l'extraction du méthane a fait l'objet de plusieurs études et projets expérimentaux pour valoriser cette quantité importante de méthane.

En général, on considère une technique consistant à faire monter dans une colonne verticale de l'eau prélevée dans les couches profondes riches en gaz dissous, en particulier en méthane. Au cours de la montée, la pression hydrostatique diminue et le gaz dissout approche de la saturation.

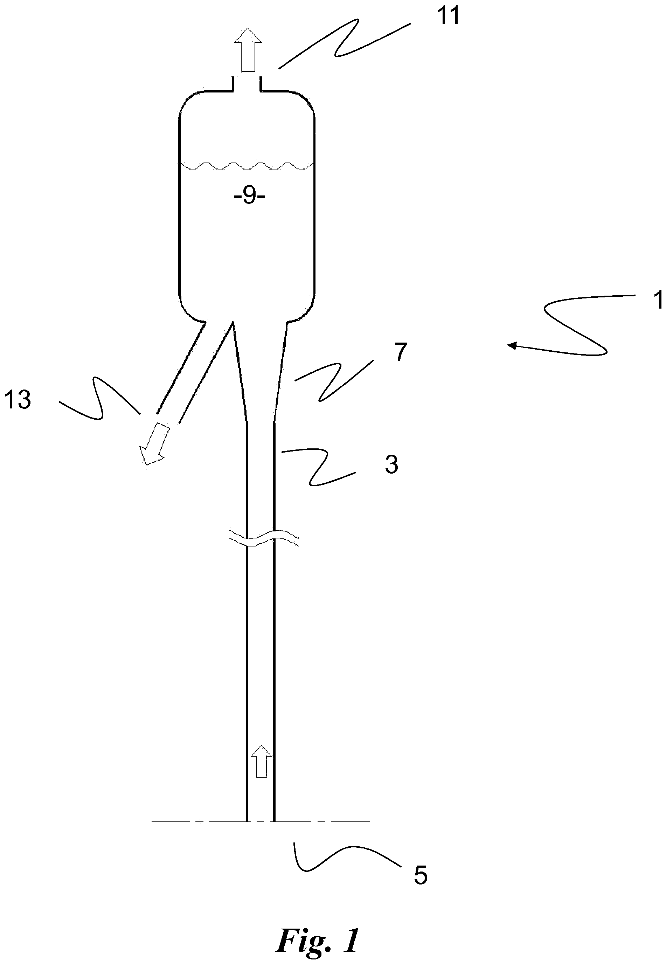

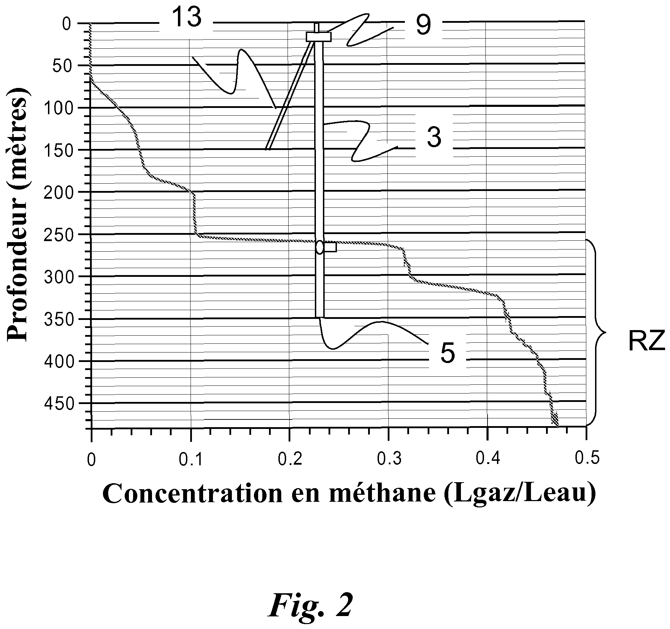

Une telle installation est représentée sur les figures 1 et 2. Les figures 1 et 2 montrent de façon schématique l'installation 1 d'extraction d'un gaz, en particulier du méthane dissout dans l'eau en grande profondeur. La figure 2 montre moins de détails de l'installation, mais permet d'apprécier les dimensions de l'installation par rapport à la topologie du lac Kivu.

Cette installation 1 comprend au moins une colonne d'extraction 3 dont l'entrée 5 débouche dans une couche d'eau contenant du gaz à extraire dissout en forte concentration. Il s'agit par exemple de la couche de ressource RZ. Dans le présent exemple, on entend par « forte concentration » une concentration permettant d'entretenir le phénomène d'auto-siphon. Pour le lac Kivu, il s'agit par exemple d'une concentration en méthane (Lgaz/Leau) supérieure ou égale à environ 0,3.

On comprend donc que l'entrée 5 de la colonne 3 est disposée, en particulier en ce qui concerne l'exemple et la topologie du lac Kivu, à une profondeur comprise entre 280m et 480m.

De préférence, l'entrée 5 est située à une profondeur d'environ 350m.

La sortie 7 de cette colonne d'extraction 3 est raccordée à un séparateur eau / gaz 9.

Le séparateur est par exemple un cylindre métallique au coeur duquel le gaz, en particulier le méthane, se sépare de l'eau.

Pour un rendement optimisé, le séparateur eau/ gaz est disposé à une profondeur sensiblement comprise entre 10m et 30m.

Ce séparateur eau/gaz 9 comprend une première sortie 11 de gaz brut vers le haut. Cette sortie 11 peut être branchée à un module de lavage des gaz qui permet d'en augmenter la concentration en méthane.

Une seconde sortie d'eau dégazée 13 du séparateur 9 permet de renvoyer l'eau dégazée vers les profondeurs du lac.

Dans cette installation, lorsque la somme des pressions partielles des gaz dissous atteint la pression hydrostatique ce qui a lieu à une profondeur déterminée dite profondeur de saturation (Ps), on constate l'apparition de bulles qui entraînent par la suite naturellement la colonne de liquide vers le haut. Il s'agit d'un processus d'exsolution qui se produit dans un liquide parvenu à saturation.

Les bulles qui sont petites lors de leur formation, entraînent vers le haut de l'eau déjà sursaturée en gaz, ce qui provoque d'une part la formation de nouvelles bulles et un grossissement des bulles déjà formées.

C'est une réaction en chaîne qui s'entretient par elle-même, et qui est confinée dans un tube et par conséquent inoffensive.

Ce dispositif d'extraction du méthane utilise donc un procédé d'exsolution naturelle appelé auto-siphon qui, une fois le processus amorcé, ne nécessite aucune énergie extérieure.

L'énergie utilisée provient de la formation d'une phase gazeuse au-dessus de la profondeur de saturation du liquide. Le mélange diphasique liquide-gaz, du fait de sa densité plus faible que le liquide, développe dès lors une énergie archimédienne qui entraîne naturellement l'ensemble de la colonne vers le haut.

Pour amorcer la réaction en chaîne, on utilise une technique connue sous le nom « gas-lift » qui consiste à injecter un gaz, par exemple de l'air à une profondeur d'environ 40m dans le tuyau de remontée des eaux de profondeur.

L'air injecté permet de faire remonter de l'eau des profondeurs du lac et ainsi amorcer la formation des bulles.

Lorsque ce processus est amorcé, le gas-lift peut être arrêté et une circulation auto-entretenue s'établit dans la colonne.

Il est à noter que le phénomène décrit ci-dessus est un peu plus complexe du fait de la présence de gaz carbonique dissous dans les eaux du lac : en fait la proportion volumique est de 20% de méthane et 80% de $CO_2$. Toutefois, l'effet du gaz carbonique peut pratiquement être négligé parce que sa solubilité dans l'eau est environ 20 fois plus importante que celle du méthane.

En faisant le bilan des forces participant au processus d'autosiphon, on a :

- la force motrice archimédienne constituée par le gaz libéré par ex-solution du liquide à saturation,
- les forces de frottement provenant de l'écoulement diphasique dans la colonne (loi de Blasius) et des pertes de charges singulières (vanne d'entrée, etc .)

D'après le principe fondamental de la dynamique, la résultante de la force motrice et des forces de frottement représente le terme d'accélération du fluide à l'intérieur de la colonne.

Au final, le débit volumique du méthane recueilli dans le séparateur est donc directement conditionné par la force motrice, c'est-à-dire par le volume total de gaz libre dans la colonne.

Pour calculer ce volume libre de gaz dans la colonne, il est possible d'utiliser un code de calcul qui prend en compte les équilibres gaz-liquide des espèces chimiques dissous dans l'eau prélevée en fonction de la pression (ou de la profondeur).

Ces calculs sont effectués précisément en supposant les équilibres réalisés entre les espèces chimiques, à la fois dans la phase gazeuse et dans la phase liquide pour toutes les pressions hydrostatiques. Or, cette condition n'est pas réaliste et il faut impérativement prendre en compte ces écarts à l'équilibre.

Deux phénomènes distincts contribuent à contrarier l'efficacité de l'autosiphon :

- le retard à la germination des bulles,
- la cinétique de mise à l'équilibre des pressions partielles de chaque espèce gazeuse dans la phase liquide et dans la phase gazeuse.

La cinétique de mise à l'équilibre entre les phases gazeuse et liquide ne concerne pas directement la présente invention. Cependant, on note que lors de la formation d'une bulle au sein d'un liquide, il apparaît une barrière à la diffusion à l'interface liquide-gaz qui déséquilibre les pressions de part et d'autre de la surface de la bulle. Dans la pratique, on ne peut donc pas appliquer les hypothèses d'équilibre homogène pour estimer le taux de vide et calculer le volume libre de gaz dans la colonne. On peut écrire une équation de diffusion représentant le flux de chaque espèce de gaz au travers de la paroi de la bulle (loi de Fick) :

$$\frac{dm}{dt} = K_L AH(p - p_{sat})$$

$K_L$ étant le coefficient de transfert, A la surface de la bulle et H le coefficient de Henry.

Par contre le paramètre $K_L A$ ne peut pas être estimé théoriquement et est accessible seulement par l'expérience.

Une telle étude sur un réacteur expérimental a été menée en collaboration avec l'Ecole Polytechnique d'Ingénieur de l'Université de Savoie, ce qui a permis d'accéder à ce paramètre $K_L A$.

Il s'avère que le retard à la germination des bulles est un phénomène très pénalisant pour l'efficacité du processus d'auto-siphon.

En effet, l'apparition au sein de la colonne d'une phase gazeuse est soumise à deux conditions :

- la somme des pressions partielles des gaz dissout doit être supérieure à la pression hydrostatique,
- la présence d'une densité importante de germe est indispensable à la nucléation de bulles de gaz.

Ce dernier point est important : dans une eau totalement pure (en l'absence d'impureté ou d'imperfection pouvant jouer le rôle de germe), l'apparition de bulles est théoriquement impossible.

Le phénomène de dégazage ne peut se développer qu'au travers d'une interface liquide-gaz. Par conséquent, lorsque la pression gazeuse locale est légèrement supérieure à la pression de saturation, les espèces dissoutes ne peuvent former des bulles que si le liquide contient des germes qui sont généralement constitués de bulles de gaz très fines.

Des expériences ont démontré que l'eau naturelle contient des quantités tellement faibles de germes que l'exsolution ne se produira pas à moins que la pression gazeuse locale devienne nettement supérieure à la pression de saturation. Un déséquilibre typique de pression nécessaire pour provoquer l'exsolution peut atteindre plusieurs bars. Ceci signifie que, dans une eau contenant peu de germes actifs, l'exsolution ne pourra intervenir que plusieurs dizaines de mètres en dessus de la profondeur de saturation. Ce phénomène va avoir une influence négative importante sur l'efficacité de l'auto-siphon en diminuant notablement le volume de gaz libre dans la colonne.

En dehors du retard à l'exsolution qui pénalise l'efficacité du phénomène d'autosiphon, on a vu qu'un autre obstacle existe qui s'oppose à la formation d'un volume important de gaz : il s'agit de la barrière à la diffusion chimique explicitée plus haut par la relation de Fick. En effet, la cinétique de mise à l'équilibre des concentrations de méthane à l'intérieur et à l'extérieur de la bulle est fonction directement de la surface de contact liquide-gaz au travers du paramètre A de l'équation de Fick. La génération d'un nuage de micro bulles permet d'améliorer considrablement cette cinétique de mise à l'équilibre : les bulles de petite taille vont présenter un très bon rapport surface/volume et donc un coefficient de surface A important. En facilitant le transfert du méthane du liquide vers la phase gazeuse, on va augmenter le volume de gaz libre dans la colonne et donc favoriser le terme moteur archimédien du processus d'autosiphon.

Par conséquent, il est absolument nécessaire d'équiper la colonne de dégazage d'un dispositif spécifique de formation d'un nuage de micro bulles jouant le rôle de germes, de manière à garantir que cette exsolution commencera dans une zone la plus proche possible de la profondeur de saturation.

On connaît des générateurs de bulles qui sont réalisés avec des émetteurs ultrason, comme celui exposé dans le document WO 2004/103913 par exemple, mais dont l'efficacité reste faible.

D'autre part, on connaît du document US 2006/0118495 un mécanisme de cavitation permettant la création de bulles par injection de liquide à haute vitesse, mais ce dernier peut être amélioré.

La présente invention vise à proposer une installation d'extraction d'un gaz, en particulier du méthane, dissout dans l'eau en grande profondeur, par exemple d'un lac comme le lac Kivu, qui permet une extraction plus efficace du méthane contenu dans l'eau du lac.

A cet effet, l'invention a pour objet une installation d'extraction d'un gaz, en particulier du méthane dissout dans l'eau en grande profondeur comprenant au moins une colonne d'extraction dont l'entrée débouche dans une couche d'eau contenant du gaz à extraire dissout en forte concentration et dont la sortie est raccordée à un séparateur eau / gaz, et un dispositif de nucléation de bulles, le dispositif de nucléation de bulles comporte au moins un injecteur d'eau à haute vélocité disposé dans la colonne d'extraction pour créer des bulles par cavitation. L'injecteur d'eau à haute vélocité comporte un tube disposé dans la colonne d'extraction et présente des trous capillaires. Les trous sont régulièrement répartis sur la périphérie du tube et sont situés dans une zone centrale de la colonne d'extraction et éloignés des parois de celle-ci.

Le dispositif d'injection de germes proposé utilise la dépressurisation de l'eau environnante induite par des jets d'eau à grande vitesse et résulte en un nuage de micro bulles formées par cavitation.

Ainsi, en initiant la formation de bulles en grand nombre (plusieurs par $mm^3$) et de petite taille (inférieure à $100\mu m$), on accroît le phénomène d'exsolution, ce qui améliore le rendement pour un même volume d'eau traité, tout en gardant les mêmes conditions de traitement.

L'installation selon l'invention peut de plus présenter une ou plusieurs caractéristiques, seules ou en combinaison parmi les suivantes :

- les bulles contiennent du méthane,
- l'injecteur d'eau à haute vélocité est placé juste au dessus de la profondeur de saturation,
- le dispositif de nucléation de bulles comporte au moins une pompe haute pression reliée à l'injecteur,

- le tube est inséré dans la colonne d'extraction par une ouverture latérale,
- les trous sont des trous capillaires d'un diamètre inférieur à 0,7mm,
- les trous sont des trous capillaires d'un diamètre d'environ 0,5mm,
- l'injecteur est immergé dans la colonne d'extraction,

- la pompe haute pression réalisée en un bloc avec l'injecteur et est immergée avec celui-ci dans la colonne d'extraction au niveau de la profondeur de saturation,
- elle comporte une unité de contrôle du débit de méthane produit comportant une unité de contrôle de l'injecteur d'eau à haute vélocité du dispositif de nucléation de bulles.

D'autres avantages et caractéristiques apparaîtront à la lecture de la description de l'invention, ainsi que des figures suivantes sur lesquelles :

- la figure 1 est un schéma simplifié de l'installation d'extraction d'un gaz selon une conception connue,
- la figure 2 est un graphique montrant la concentration de méthane dissout dans l'eau du lac Kivu au Rwanda en fonction de la profondeur du lac et un schéma simplifié de l'installation selon la figure 1,
- la figure 3 est un schéma simplifié d'un mode de réalisation de l'installation selon l'invention, et
- la figure 4 est une vue plus détaillée d'un mode de réalisation d'un injecteur à haute vélocité selon l'invention.

Sur toutes les figures, les éléments identiques portent les mêmes numéros de référence.

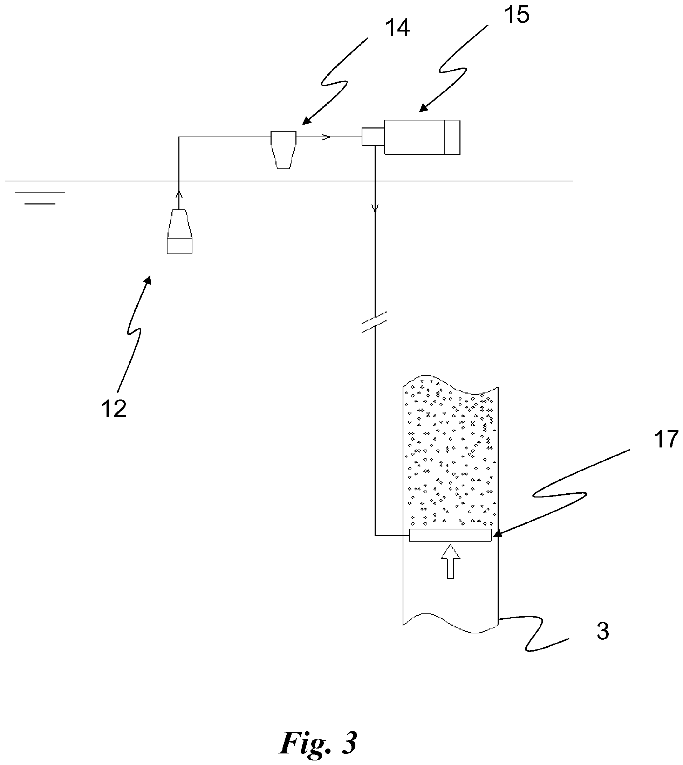

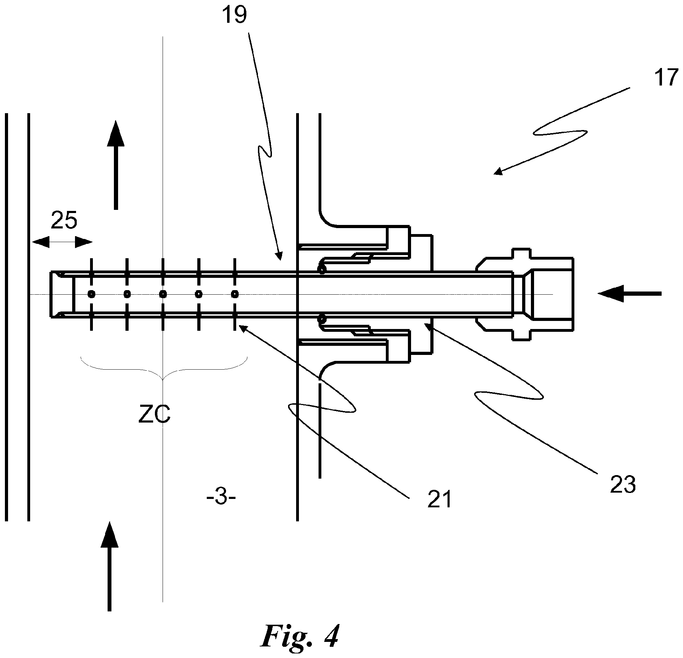

Les figures 3 et 4 montrent en détail un mode de réalisation particulier d'une d'une installation d'extraction 1 comportant un dispositif de nucléation de bulles par cavitation.

La figure 3 montre de façon schématique l'installation 1 d'extraction d'un gaz, en particulier du méthane dissout dans l'eau en grande profondeur selon l'invention.

Cette installation 1 comprend au moins une colonne d'extraction 3 dont l'entrée 5 débouche dans une couche d'eau contenant du gaz à extraire dissout en forte concentration. L'autre extrémité 7 de la colonne d'extraction 3 aboutit à un séparateur 9 situé en surface du lac où l'eau et le gaz sont séparés, le gaz étant récolté par un premier orifice 11 et l'eau rejetée dans le lac par un second orifice 13.

Le dispositif de nucléation de bulles comprend notamment une première pompe immergée 12 située près de la surface qui aspire de l'eau, un filtre 14 relié à la première pompe qui filtre l'eau pompée, une pompe à haute pression 15 en sortie du filtre qui soumet l'eau filtrée à une pression de l'ordre de 100 bar et un injecteur haute vélocité 17, situé à l'intérieur de la colonne 3, au dessus mais proche de saturation (Ps), et relié à la sortie de la pompe haute pression 15.

L'injecteur 17 est situé à l'intérieur de la colonne d'extraction à une profondeur quelque peu supérieure à la profondeur de saturation (Ps) où la pression correspond à la pression limite d'équilibre pour la concentration en gaz. De la sorte, ledit injecteur 17 se situe dans un milieu où la solution de gaz est thermodynamiquement instable.

La figure 4 montre plus en détail un mode de réalisation d'un injecteur haute vélocité 17 selon l'invention.

Avantageusement l'injecteur 17 est composé d'un tube 19 percé de plusieurs trous capillaires 21, et inséré dans la colonne 3 par une ouverture 23 de manière à être aisément interchangeable. Les trous 21 sont régulièrement répartis sur le pourtour du tube 19, et répartis de sorte que les jets d'eau expulsés pointent dans toutes les directions radiales dudit tube 19.

La répartition des trous capillaires 21 est telle que lesdits trous 21 se trouvent tous à une certaine distance de sécurité 25 des parois de la colonne d'extraction 3, afin d'éviter leur usure par la cavitation. En outre, avec une telle configuration, les trous 21 sont placés dans une zone centrale ZC de la colonne 3, ce qui contribue à optimiser la répartition des bulles dans le flux d'eau ascendant.

Avec une telle configuration, un diamètre inférieur à 0,7mm, de l'ordre de 0,5mm pour les trous 21, et une pression de l'ordre de 100 bar pour l'eau injectée par la pompe haute pression, les valeurs de vitesse en sortie de l'injecteur 17 conduisent à la formation de bulles nombreuses (près de 3 bulles/mm$^3$) et de petite taille (inférieure à 100$\mu$m) ce qui permet d'accroître la vitesse d'exsolution de gaz et donc le rendement de l'installation 1.

La colonne envisagée au lac Kivu a un diamètre intérieur de 59mm. Avec une vitesse d'écoulement de 1,5 m/s on trouve un débit d'environ 4 l/s. Il faudra donc dans le cas idéal injecter 12.10$^8$ bulles par seconde pour atteindre les 3 bulles par mm$^3$ qui correspondent à l'optimum désiré.

L'injecteur haute vélocité prévu pour l'installation comporte 20 trous capillaires de 0,5 mm de diamètre. Avec une telle configuration un débit en sortie de la pompe à haute pression 15 de 0,15 l/s tel que peuvent le fournir les pompes usuelles est suffisant pour atteindre un résultat significatif.

Ce dispositif d'injection peut donc être installé à quelques mètres au-dessus de la profondeur de saturation théorique. La quantité requise de germes injectés a été évalué à l'aide de considérations d'efficacité des transferts de masse, ce qui est généralement déterminé en utilisant la loi dite de Fick précédemment décrite. La concentration optimale calculée est de 3 germes par mm$^3$. Il s'agit d'une très forte concentration qui impose pratiquement d'injecter des bulles très fines. Le diamètre de bulles injectées est largement inférieur à 100$\mu$m.

En raison de la grande quantité de germes qui doivent être injectés les performances de l'injecteur sont un paramètre clé pour l'efficacité globale de l'unité d'extraction du méthane.

La pression d'injection est égale à la pression hydrostatique locale et la pression de l'eau fournie par la pompe haute pression de 100 bars.

Alternativement, l'injecteur 17 peut comporter la pompe haute pression 15 immergée dans la colonne d'extraction 3, de préférence de forme cylindrique pour une colonne d'extraction 3 à section circulaire. Réalisé de manière compacte et relativement monobloc avec la pompe haute pression 15, l'injecteur 17 forme un bloc qui peut aisément être immergé dans la colonne d'extraction 3 au niveau de la profondeur de saturation.

De plus, en contrôlant le débit de bulles injectées, par exemple au moyen d'une unité de contrôle du débit de l'injecteur haute vélocité 17 éventuellement au moyen d'un contrôle du débit de la pompe haute pression 15, la quantité de bulles de méthane plus haut dans la colonne d'extraction 3 est contrôlée. En augmentant ou en diminuant la quantité de bulles présentes, la densité du fluide dans la colonne 3 est changée. Si le fluide est moins dense, la force ascensionnelle archimédienne est augmentée, ce qui augmente le débit. Si le fluide est plus dense, à l'inverse, la force ascensionnelle archimédienne est diminuée, ce qui diminue le débit.

En choisissant le débit de bulle précis en sortie de l'injecteur haute vélocité 17, le débit stationnaire continu en sortie de la colonne d'extraction 3 est contrôlé. De la sorte, la quantité de méthane produite par unité de temps peut être dynamiquement adaptée aux besoins momentanés. On peut donc pourvoir l'installation d'extraction 1 d'une unité de contrôle du débit de méthane produit comportant une unité de contrôle du débit de bulles.

On comprend donc que le dispositif de nucléation de bulles travaillant par effet de cavitation est peu coûteux, aisément adaptable sur les installations telles qu'elles existent et robuste dans son fonctionnement tout en améliorant le rendement de l'installation.

## Revendications

1. Installation (1) d'extraction d'un gaz, en particulier du méthane dissout dans l'eau en grande profondeur comprenant au moins une colonne d'extraction (3) dont l'entrée (5) débouche dans une couche d'eau contenant du gaz à extraire dissout en forte concentration et dont la sortie est raccordée à un séparateur eau / gaz (9), un dispositif de nucléation de bulles, le dispositif de nucléation de bulles comporte au moins un injecteur d'eau à haute vélocité (17) disposé dans la colonne d'extraction (3) pour créer des bulles par cavitation, **caractérisé en ce que** l'injecteur d'eau à haute vélocité (17) comporte un tube (19) disposé dans la colonne d'extraction (3) et présentant des trous capillaires (21), les trous (21) étant régulièrement répartis sur la périphérie du tube (19), **et en ce que** les trous (21) sont situés dans une zone centrale (ZC) de la colonne d'extraction (3) et éloignés des parois de celle-ci.

2. Installation (1) d'extraction d'un gaz selon la revendication 1, **caractérisé en ce que** les bulles contiennent du méthane.

3. Installation (1) d'extraction d'un gaz selon la revendication 1 ou 2, **caractérisée en ce que** l'injecteur d'eau à haute vélocité (17) est placé juste au dessus de la profondeur de saturation.

4. Installation (1) d'extraction d'un gaz selon la revendication 1, 2 ou 3, **caractérisée en ce que** le dispositif de nucléation de bulles (10) comporte au moins une pompe haute pression reliée à l'injecteur (17).

5. Installation (1) d'extraction d'un gaz selon l'une quelconque des revendications précédentes, **caractérisée en ce que** le tube (19) est inséré dans la colonne d'extraction par une ouverture latérale (23).

6. Installation (1) d'extraction d'un gaz selon l'une quelconque des revendications précédentes, **caractérisée en ce que** les trous (21) sont des trous capillaires d'un diamètre inférieur à 0,7mm.

7. Installation (1) d'extraction d'un gaz selon l'une quelconque des revendications précédentes, **caractérisée en ce que** les trous (21) sont des trous capillaires d'un diamètre d'environ 0,5mm.

8. Installation selon l'une quelconque des revendications précédentes, **caractérisée en ce que** l'injecteur (17) est immergé dans la colonne d'extraction (3).

9. Installation selon la revendication 8, **caractérisée en ce que** la pompe haute pression est réalisée en un bloc avec l'injecteur (17) et est immergée avec celui-ci dans la colonne d'extraction au niveau de la profondeur de saturation (Ps).

10. Installation (1) d'extraction d'un gaz selon l'une des revendications 1 à 9, **caractérisée en ce qu'**elle comporte une unité de contrôle du débit de méthane produit comportant une unité de contrôle de l'injecteur d'eau à haute vélocité (17) du dispositif de nucléation de bulles.

**Patentansprüche**

1. Anlage (1) zur Gewinnung eines Gases, insbesondere von gelöstem Methan in großer Wassertiefe, die mindestens eine Extraktionssäule (3), deren Eingang (5) in einer Wasserschicht mündet, die hochkonzentriertes gelöstes zu gewinnendes Gas enthält, und deren Ausgang an einen Wasser/Gas-Separator (9) angeschlossen ist, und eine Blasenbildungsvorrichtung enthält, wobei die Blasenbildungsvorrichtung mindestens eine Hochgeschwindigkeits-Wassereinspritzdüse (17) aufweist, die in der Extraktionssäule (3) angeordnet ist, um durch Kavitation Blasen zu erzeugen, **dadurch gekennzeichnet, dass** die Hochgeschwindigkeits-Wassereinspritzdüse (17) ein Rohr (19) aufweist, das in der Extraktionssäule (3) angeordnet ist und Kapillarlöcher (21) aufweist, wobei die Löcher (21) gleichmäßig auf dem Umfang des Rohrs (19) verteilt sind, und dass die Löcher (21) sich in einer mittleren Zone (ZC) der Extraktionssäule (3) befinden und von ihren Wänden entfernt sind.

2. Anlage (1) zur Gewinnung eines Gases nach Anspruch 1, **dadurch gekennzeichnet, dass** die Blasen Methan enthalten.

3. Anlage (1) zur Gewinnung eines Gases nach Anspruch 1 oder 2, **dadurch gekennzeichnet, dass** die Hochgeschwindigkeits-Wassereinspritzdüse (17) direkt über der Sättigungstiefe angeordnet ist.

4. Anlage (1) zur Gewinnung eines Gases nach Anspruch 1, 2 oder 3, **dadurch gekennzeichnet, dass** die Blasenbildungsvorrichtung (10) mindestens eine mit der Einspritzdüse (17) verbundene Hochdruckpumpe aufweist.

5. Anlage (1) zur Gewinnung eines Gases nach einem der vorhergehenden Ansprüche, **dadurch gekennzeichnet, dass** das Rohr (19) durch eine seitliche Öffnung (23) in die Extraktionssäule eingeführt wird.

6. Anlage (1) zur Gewinnung eines Gases nach einem der vorhergehenden Ansprüche, **dadurch gekennzeichnet, dass** die Löcher (21) Kapillarlöcher mit einem Durchmesser von weniger als 0,7 mm sind.

7. Anlage (1) zur Gewinnung eines Gases nach einem der vorhergehenden Ansprüche, **dadurch gekennzeichnet, dass** die Löcher (21) Kapillarlöcher mit einem Durchmesser von etwa 0,5 mm sind.

8. Anlage nach einem der vorhergehenden Ansprüche, **dadurch gekennzeichnet, dass** die Einspritzdüse (17) in die Extraktionssäule (3) eingetaucht ist.

9. Anlage nach Anspruch 8, **dadurch gekennzeichnet, dass dadurch gekennzeichnet, dass** die aus einem Stück mit der Einspritzdüse (17) hergestellte Hochdruckpumpe und mit dieser in die Extraktionssäule im Bereich der Sättigungstiefe (Ps) eingetaucht ist.

10. Anlage (1) zur Gewinnung eines Gases nach einem der Ansprüche 1 bis 9, **dadurch gekennzeichnet, dass** sie eine Kontrolleinheit des erzeugten Methandurchsatzes aufweist, die eine Kontrolleinheit der Hochgeschwindigkeits-Wassereinspritzdüse (17) der Blasenbildungsvorrichtung aufweist.

**Claims**

1. Installation (1) for extracting a gas, in particular methane dissolved in water at great depth, comprising at least one extraction column (3), the inlet (5) of which opens into a water layer containing gas to be extracted dissolved in high concentration and the outlet of which is connected to a water/gas separator (9), a bubble nucleation device, the bubble nucleation device comprising at least one high-speed water injector (17) arranged in the extraction column (3) in order to create bubbles by cavitation, **characterized in that** the high-speed water injector (17) comprises a tube (19) arranged in the extraction column (3) and having capillary holes (21), the holes (21) being regularly distributed on the periphery of the tube (19), and **in that** the holes (21) are located in a central zone (ZC) of the extraction column (3) and are at a distance from the walls thereof.

2. Gas extraction installation (1) according to Claim 1, **characterized in that** the bubbles contain methane.

3. Gas extraction installation (1) according to Claim 1 or 2, **characterized in that** the high-speed water injector (17) is placed just above the saturation depth.

4. Gas extraction installation (1) according to Claim 1, 2 or 3, **characterized in that** the bubble nucleation device (10) comprises at least one high-pressure pump connected to the injector (17).

5. Gas extraction installation (1) according to any one of the preceding claims, **characterized in that** the tube (19) is inserted into the extraction column through a lateral opening (23).

6. Gas extraction installation (1) according to any one of the preceding claims, **characterized in that** the holes (21) are capillary holes with a diameter of less than 0.7 mm.

7. Gas extraction installation (1) according to any one of the preceding claims, **characterized in that** the holes (21) are capillary holes with a diameter of about 0.5 mm.

8. Installation according to any one of the preceding claims, **characterized in that** the injector (17) is immersed in the extraction column (3).

9. Installation according to Claim 8, **characterized in that** the high-pressure pump is made in one unit with the injector (17) and is immersed therewith in the extraction column at the level of the saturation depth (Ps).

10. Gas extraction installation (1) according to one of Claims 1 to 9, **characterized in that** it comprises a unit for controlling the flow rate of methane produced comprising a unit for controlling the high-speed water injector (17) of the bubble nucleation device.

*Fig. 1*

**Fig. 2**

*Fig. 3*

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004103913 A

- US 20060118495 A